# EUROPEAN PATENT APPLICATION

(11) **EP 4 336 429 A1**
(43) Date of publication of application: **13.03.2024**
(21) Application number: 22194520.7
(22) Date of filing: 08.09.2022
(51) Int. Cl.: G06Q 10/0635, G06V 20/20

(54) **DISPLAYING CONCEALED HIGH-RISK LEVEL COMPONENTS INSIDE A VEHICLE**

(71) Applicant: VOLVO TRUCK CORPORATION, 405 08 Göteborg (SE)
(72) Inventor: Barnoux, Vincent, 69230 St. Genis Laval (FR)
(74) Representative: Valea AB

(57) **Abstract**

An AR device (110) and method therein for identifying and displaying one or more high-risk level components (160) inside a vehicle (150) are disclosed. The AR device (110) obtains a digital representation of the vehicle (110), digital representations of one or more high-risk level components (160), and locations of one or more high-risk level components (160) relative to the digital representation of the vehicle (150). The AR device (110) corresponds the digital representation of the vehicle (150) to the vehicle (150) in a field of view of the AR device (110) and displays the digital representations of the one or more high-risk level components (160) on a display (114) of the AR device (110). The digital representations of the one or more high-risk level components (160) are aligned with and overlaying on the vehicle (150) in the field of view of the AR device (110) to identify the locations of the one or more high-risk level components (160) inside the vehicle (150).

## Description

### TECHNICAL FIELD

The disclosure relates generally to an emergency response guide for vehicles. In particular aspects, the disclosure relates to displaying concealed high-risk level components inside a vehicle.

The disclosure can be applied in heavy-duty vehicles, such as trucks, buses, and construction equipment. Although the disclosure will be described with respect to a particular vehicle, the disclosure is not restricted to any particular vehicle.

### BACKGROUND

Emergency response guide (ERG) for vehicles follows standards of the International Organization for Standardization (ISO) to provide necessary and useful information about a vehicle involved in an accident, such as to support a rescue team rescuing occupants as quickly and as safely as possible, and to promote the correct action with respect to the vehicle technology concerned. ERG also provides in-depth information related to fire, submersion and leakage of fluids. In ERG for vehicles, information on generic schematic architecture of vehicles, locations of hazardous components and structural details of the hazardous components are provided for ease of use by the first and second responders. An ERG may be related to a specific vehicle model, to a family of similar vehicle models, or to a certain type of vehicle technology in general. For example, a response guide may provide a schematic side view and top view of a vehicle that identifies locations of a number of lithum-ion batteries in the schematic architecture of the vehicle.

### SUMMARY

According to a first aspect of the disclosure, a method for displaying and identifying one or more high-risk level components inside a vehicle is provided. The method comprises obtaining, by an AR device, a digital representation of the vehicle, digital representations of one or more high-risk level components and locations of one or more high-risk level components relative to the digital representation of the vehicle; corresponding, by the AR device, the digital representation of the vehicle to the vehicle in a field of view of the AR device; and displaying, by the AR device, the digital representations of the one or more high-risk level components on a display of the AR device. The digital representations of the one or more high-risk level components are aligned with and overlaying on the vehicle in the field of view of the AR device to identify the locations of the one or more high-risk level components inside the vehicle.

The first aspect of the disclosure may seek to display and identify the high-risk level components inside a vehicle to a user of the AR device. A technical benefit may include visualizing precisely positioned hazardous components inside the vehicle as if the physical vehicle becomes transparent and the hidden components are revealed and thereby reduce the possibility of personal injuries, reduce response time and increase rescuing efficiency.

In some examples, the digital representation of the vehicle, digital representations of the one or more high-risk level components and locations of one or more high-risk level components relative to the digital representation of the vehicle may be received from a server or cloud based on a type of the vehicle.

In some examples, the digital representation of the vehicle, digital representations of the one or more high-risk level components and locations of one or more high-risk level components relative to the digital representation of the vehicle may be generated based on an emergency response guide of the vehicle.

According to some examples, the one or more high-risk level components may comprise any one of compressed air system, fuel tanks, airbags, high voltage components, batteries and cables.

According to a second aspect of the disclosure, an AR device for displaying and identifying one or more high-risk level components inside a vehicle is provided. The AR device is configured to obtain a digital representation of the vehicle, digital representations of one or more high-risk level components and locations of one or more high-risk level components relative to the digital representation of the vehicle, correspond the digital representation of the vehicle to the vehicle in a field of view of the AR device; and display the digital representations of the one or more high-risk level components on a display of the AR device. The digital representations of the one or more high-risk level components are aligned with and overlaying on the vehicle in the field of view of the AR device to identify the locations of the one or more high-risk level components inside the vehicle.

In some examples, the AR device may be any one of a handheld wireless device, smart glasses, a head-up display or a head-mounted display configured to provide emergency response guidance for a first responder at an accident site.

According to a third aspect of the disclosure, there is provided a computer program product comprising program code for performing, when executed by the AR device, the method of displaying and identifying one or more high-risk level components inside a vehicle described above.

According to a fourth aspect of the disclosure, there is provided a non-transitory computer-readable storage medium comprising instructions, which when executed by a processor device, cause the processor device to perform the method of displaying and identifying one or more high-risk level components inside a vehicle described above.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein computer readable media, and computer program products associated with the above discussed technical effects and corresponding advantages.

### BRIEF DESCRIPTION OF THE DRAWINGS

With reference to the appended drawings, below follows a more detailed description of aspects of the disclosure cited as examples.
**Fig. 1** is a schematic block diagram showing an exemplary communication system in which embodiments herein may be implemented;
**Fig. 2** is a flow chart showing a method for displaying and identifying one or more high-risk level components inside a vehicle according to one example;
**Fig. 3** is an example image showing a vehicle in a field of view of an AR device overlayed with a digital representation of a high-risk level component;
**Fig. 4** is an example image showing an enlarged part where the high-risk level component is located;
**Fig. 5** is a schematic block diagram showing an exemplary AR device; and
**Fig. 6** is a schematic diagram of an exemplary computer system for implementing examples disclosed herein, according to one example.

### DETAILED DESCRIPTION

Aspects set forth below represent the necessary information to enable those skilled in the art to practice the disclosure.

The emergency response guide is generally provided in flat formats, e.g., Portable Document Format (PDF) and in generic schematics. Emergency personnel may not be trained on all vehicles and especially for new hazardous components like in battery electric vehicles (BEV) using chemical energy stored in rechargeable battery packs. There may be little time to read an ERG when an accident occurs. Understanding precise locations of hazardous components inside a vehicle can safeguard from personal injuries, reduce response time, and/or increase rescuing efficiency.

The disclosure uses Augmented Reality (AR) to precisely overlay digital representations of components inside the vehicle and/or digital representations of at least portions of the vehicle itself (such as by visual effects that emulate transparency or X-ray to highlight concealed hazardous components and structural details inside the vehicle). An AR device enables a user to visualize concealed hazardous components inside the vehicle as if the physical vehicle becomes transparent and the concealed hazardous components are revealed.

The disclosure uses various AR capabilities, such as artifacts, rendering computation (e.g., shaders to digital objects), etc., to precisely visualize hazardous components inside the vehicle and provide emergency response guidance for a first responder at an accident site. The disclosure improves the understanding and usability of the ERG and reduces the possibility of personal injuries, reduce response time and/or increase rescuing efficiency.

AR expands our physical world, adding layers of digital information. Unlike Virtual Reality (VR), AR does not create the entirety of artificial environments to replace everything real with everything virtual. AR appears in direct view of an existing environment and adds sounds, videos, graphics to supplement reality. AR may also be referred as Mixed Reality (MR).

AR provides a view of the physical real-world environment with superimposed computer-generated images, thus changing the perception of reality. AR is a perfect way to visualize things that would be impossible or impractical to see otherwise. AR devices may include Heads up/mounted displays (HUD, HMD), Holographic displays, Smart Glasses, Handheld AR devices, etc.

The disclosure may use AR capabilities with visual effects to emulate transparency or X-ray to highlight concealed hazardous components and structural details inside a vehicle. The disclosure may use an AR device to enable a user to visualize the hazardous components inside the vehicle as if the physical vehicle becomes transparent and the hidden components are revealed. The AR device may be operating in an AR system.

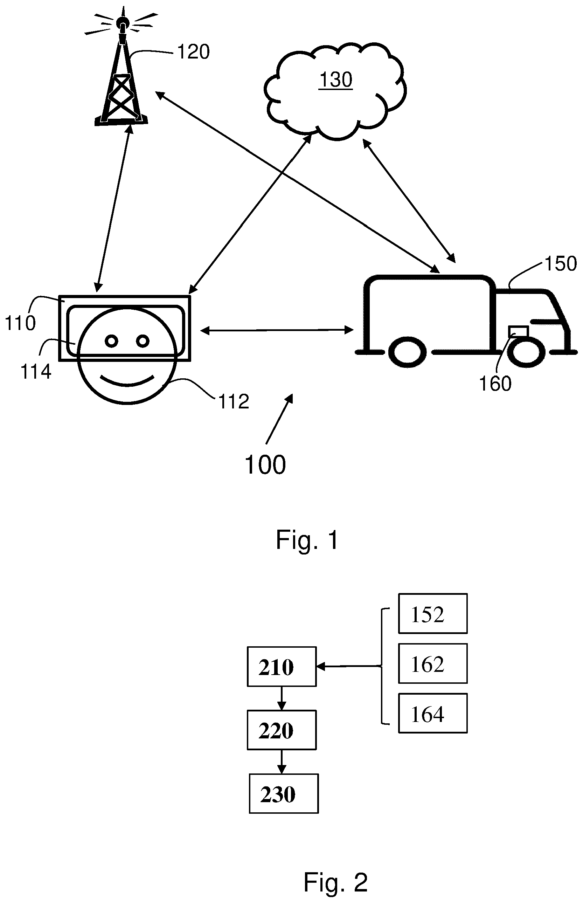

**Fig. 1** is a schematic diagram showing an example of a communication system **100** in which embodiments herein may be implemented. The communication system 100 comprises a communication device **110,** e.g., an AR device 110. The AR device 110 may be associated with a user **112.** The communication 100 may further comprise a network node **120,** a cloud or server **130.**

The network node 120 is a network access node which may be a base station (BS), for example, an eNB, gNB, eNodeB, gNodeB, or a Home NodeB, or a Home eNodeB or a Home gNodeB in a wireless communication network. The wireless communication network may be any wireless system or cellular network, such as a second generation (2G) Global System for Mobile Communications (GSM), a third generation (3G) telecommunication network e.g. Universal Mobile Telecommunications System (UMTS), a Fourth Generation (4G) network, e.g. Evolved Packet System (EPS) or Long Term Evolution (LTE) network, a Fifth Generation (5G) New Radio (NR) network, or Wimax network, Wireless Local Area Network (WLAN) or Wi-Fi network etc.

The AR device 110 may be a head mounted device or glasses with an AR display **114.** The AR display 114 may be a transparent display or see-through display. However, any communication device with other types of devices and displays may be used. AR devices with transparent display may be known as Optical-see-through AR devices, and video-displayed AR may be known as video-see-through AR. Further, in certain examples, a mobile phone screen, VR headsets with external capture cameras, wearable or handheld video-see-through AR displays etc., may be used and regarded as an AR device as the real world may be combined with overlays displayed on a screen.

An AR device with a see-through display, e.g. AR-HMDs, may be used, which enables the layering of 2D or 3D virtual information or digital representation of an object over a user's view of the world via the see-through display. Optical See-Through HMDs (OST-HMDs) may be used, which have the capability of reflecting projected images to a transparent material which allows the user to see through it, therefore overlaying projected content on top of the real-world view.

A vehicle **150** may include one or more concealed hazardous components **160** and structural details inside the vehicle, which may be identified and displayed using the AR device 110.

The AR device 110 may communicate with the network node 110, or the cloud/server 130 to receive and transmit information, or to distribute processing tasks etc.

The AR device 110 may also communicate with the vehicle 150, and the vehicle 150 may also communicate with the network node 110, or the cloud/server 130 to receive and transmit information. A telematics system includes a vehicle tracking device may be installed in a vehicle that allows sending, receiving and storing of data. The telematics system connects via the vehicle's own onboard diagnostics (ODB) or a Controller Area Network Bus (CAN-BUS) port with a subscriber identification module (SIM) card, and an onboard modem enables communication to the cloud/server 130 through the network node 120 in a wireless network, e.g. 4G, 5G or New Radio (NR) network or via a satellite.

**Fig. 2** is a flow chart showing a method for displaying and identifying one or more high-risk level components inside a vehicle according to one example.

### Action 210

In order to display and identify the high-risk level components 160 using the AR device 110, the AR device 110 obtains a digital representation **151** of the vehicle 150, digital representations **162** of one or more high-risk level components 160, and locations **164** of one or more high-risk level components 160 relative to the digital representation 152 of the vehicle.

A digital representation of an object, e.g. a vehicle, a component, may refer to a computer aided-design model of the object or a digital image of the object in 2D or 3D.

In ERG for vehicles, information on generic schematic architecture of vehicles, locations of hazardous components and structural details of the hazardous components may be provided. Therefore, according to one example, the digital representation 152 of the vehicle 150, digital representations 162 of the one or more high-risk level components 160, and locations 164 of one or more high-risk level components 160 relative to the digital representation 152 of the vehicle 150 may be generated or extracted based on an emergency response guide of the vehicle 150. That is the ERG for vehicles will be pre-processed beforehand to produce documentation contains the digital representations of a vehicle and one or more high-risk level components, locations of the one or more high-risk level components relative to the digital representation of the vehicle. The documentation is made available in the cloud/server 130 for further consumption by the AR device. The one or more high-risk level components may comprise e.g. compressed air system, fuel tanks, airbags, high voltage components, batteries, and/or cables, etc., which are described in the ERG according to ISO. Definition of what is an hazardous component is given by the ISO standard. It may or not be present in a vehicle, depending on the configuration and technology of the vehicle, e.g. a diesel tank will not be in an electric truck.

An ERG may be related to a specific vehicle model, to a family of similar vehicle models, or to a certain type of vehicle technology in general. So the digital representation of the vehicle, digital representations of the one or more high-risk level components, and locations of one or more high-risk level components may be generated for a family of similar vehicle models or a type of vehicle and stored in a database in the cloud/server 130. To provide accurate information by using AR, the digital representation of the vehicle, digital representations of the one or more high-risk level components, and locations of one or more high-risk level components may therefore be generated and made available precisely for each truck.

Therefore, according to one example, the AR device 110 may receive the digital representation 152 of the vehicle 150, digital representations 162 of the one or more high-risk level components 160, and locations 164 of one or more high-risk level components 160 relative to the digital representation 152 of the vehicle 150 from the cloud/server 130 based on a type of the vehicle 150.

According to some examples, the type of the vehicle 150 may be obtained by inputting a series number of the vehicle 150 or a Vehicle Identification Number of the vehicle 150 into the AR device 110. The type of the vehicle 150 may also be obtained by scanning the vehicle 150, or by scanning a license plate of the vehicle 150, a bar code or Quick Response (QR) code of the vehicle 150 using the AR device 110. The type of the vehicle 150 may also be obtained by taking a photo of the vehicle 150 and recognizing the type of the vehicle 150 by the AR device 110.

According to one example, in case the AR device 110 has enough processing capacity and capability, the AR device 110 may generate the digital representation 152 of the vehicle 150, digital representations 162 of the one or more high-risk level components, and locations 164 of one or more high-risk level components relative to the digital representation 152 of the vehicle 150 based on an emergency response guide of the vehicle 150.

According to one example, a specific rendering computation called shaders to digital objects may be used to create the artifacts or digital representations of the vehicle 150 and one or more high-risk level components 160.

### Action 220

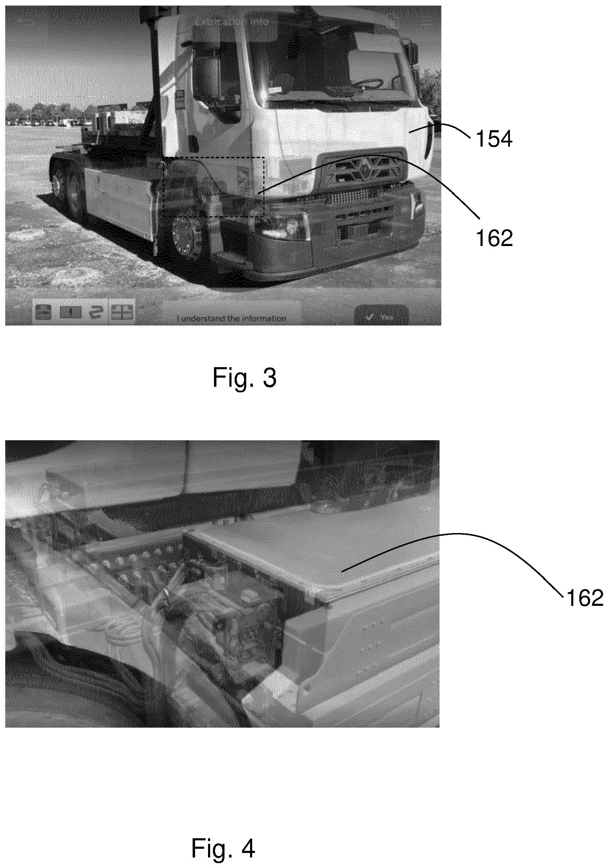

In order to display the digital representations 162 of the one or more high-risk level components 160 on the display 114 to precisely overlay on the vehicle 150 in a field of view of the AR device 110, the AR device 110 corresponds the digital representation 152 of the vehicle 150 to the vehicle 150 in the field of view of the AR device 110. The vehicle 150 in the field of view of the AR device 110 is referred as the image or physical representation **154** of the vehicle 150 on the display as seen by a user 112 of the AR device 110. **Fig. 3** shows an example image of the vehicle 150 in the field of view of the AR device 110, i.e. the image or physical representation 154 of the vehicle 150 on the display 114 as seen by a user 112 of the AR device 110 overlayed with a digital representation 162 of the high-risk level component 160. **Fig. 4** shows an example image of an enlarged part where the digital representation 162 of the high-risk level component 160 is located, and where the detailed structure of the high-risk level component 160 is visualized.

The AR device 110 corresponds the digital representation 152 of the vehicle 150 to the vehicle 150 in the field of view of the AR device 110 by adjusting, e.g. the size and angle of the digital representation 152 of the vehicle 150 such that the digital representation 152 of the vehicle 150 is aligned with the image 154 of the vehicle 150 on the display as seen by a user 102 of the AR device 110. This may be achieved by using computer vision and AI neural networks trained for each truck configuration, e.g. using Vuforia Engine. Vuforia Engine is an AR development platform which can create AR experiences that realistically interact with objects and the environment. Vuforia Engine's recognition and tracking capabilities can be used on a variety of images and objects.

### Action 230

The AR device 110 displays the digital representations 162 of the one or more high-risk level components 160 on the display 114 of the AR device 110 based on the obtained locations 164 of the one or more high-risk level components 160 relative to the digital representation 152 of the vehicle 150. Since the digital representation 152 of the vehicle 150 is aligned with the image or physical representation 154 of the vehicle 150 on the display as seen by a user 102 of the AR device 110, the digital representations 162 of the one or more high-risk level components 160 are aligned with and overlaying on the vehicle 150 in the field of view of the AR device 110, thereby the locations of the one or more high-risk level components 160 inside the vehicle 150 are identified and displayed as if the physical vehicle 150 become transparent and hidden components are revealed, as shown in Fig. 3 and 4. The transparency effect is done by using e.g. shaders to compute and render the digital representation in a certain way that one think it becomes transparent.

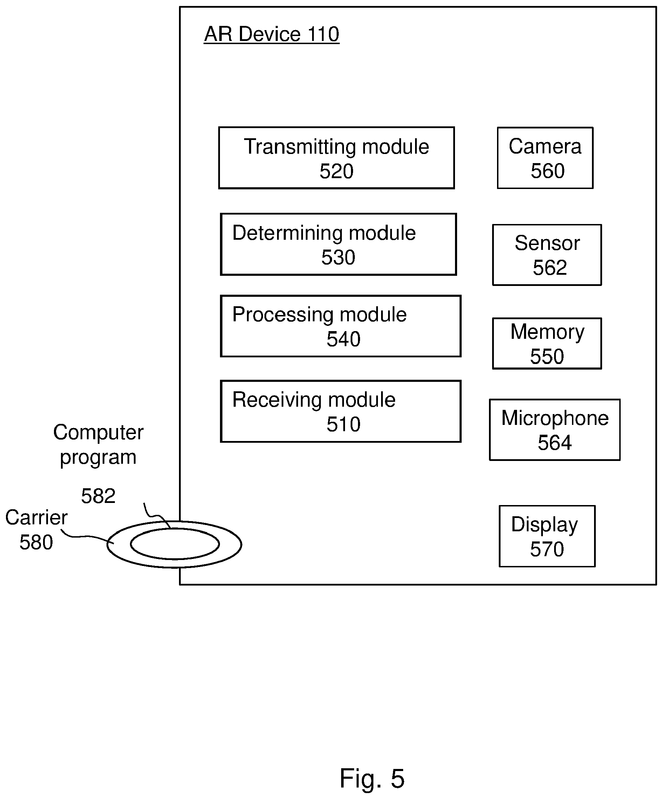

To perform the method for displaying and identifying one or more high-risk level components inside a vehicle, the AR device 110 may comprise modules or units as shown in **Fig. 5****.** The AR device 110 may comprise a **receiving module 510, a transmitting module 520, a determining module 530, a processing module 540, a memory 550, a camera module 560, a sensor module 562, a microphone module 564, a display module 570** etc.

The AR device 110 is configured to perform any one of the method actions 310-330 described above.

The AR device 110 is configured to, e.g., by the receiving module 510 or processing module 540 being configured to, obtain a digital representation 152 of the vehicle 150, digital representations 162 of one or more high-risk level components 160, and locations 164 of one or more high-risk level components 160 relative to the digital representation 150 of the vehicle 150.

The AR device 110 is configured to, e.g., by the processing module 540 being configured to, correspond the digital representation 152 of the vehicle 150 to the vehicle 150 in the field of view of the AR device 110.

The AR device 110 is configured to, e.g., by the processing module 540 and display module 570 being configured to, display the digital representations 162 of the one or more high-risk level components 160 on a display of the AR device 110 to identify the locations of the one or more high-risk level components 160 inside the vehicle 150. The digital representations 162 of the one or more high-risk level components 160 are aligned with and overlaying on the vehicle 150 in the field of view of the AR device 110.

Those skilled in the art will appreciate that the receiving module 510, the transmitting module 520, the determining module 530 and the processing module 540 described above in the AR device 110 may be referred to one circuit or unit, a combination of analog and digital circuits, one or more processors, configured with software and/or firmware and/or any other digital hardware performing the function of each circuit/unit. One or more of these processors, the combination of analog and digital circuits as well as the other digital hardware, may be included in a single application-specific integrated circuitry (ASIC), or several processors and various analog/digital hardware may be distributed among several separate components, whether individually packaged or assembled into a system-on-a-chip (SoC).

The method according to embodiments herein may be implemented through one or more processors in the AR device 110 together with computer program code for performing the functions and actions of the embodiments herein. The program code mentioned above may also be provided as a computer program product, for instance in the form of a data carrier **580** carrying computer program code **582,** as shown in Fig. 5, for performing the embodiments herein when being loaded into the AR device 110. One such carrier is shown as the form of a CD ROM disc. It is however feasible with other data carriers such as a memory stick, a non-transitory computer-readable storage medium etc. The computer program code may furthermore be provided as pure program code on the server 140 or cloud 130 and downloaded to the AR device 110.

The memory 550 in the AR device 110 may comprise one or more memory units and may be arranged to be used to store received information, measurements, data, configurations and applications to perform the method herein when being executed in the AR device 110.

To summarize, embodiments herein use standard AR capabilities and AR artifacts to improve the understanding and usability of the ERG which only exists today in flat formats i.e. PDF and generic schematics, and use AR visual effect that will emulate transparency or Xray to highlight hazardous concealed components and structural details such that the high-risk level components inside a vehicle can be precisely identified and positioned.

The disclosure is a specific use of AR capabilities to a specific extend for this particular emergency response guide context.

The AR device 110 may be any one of a handheld wireless device, smart glasses, a head-up display or a head-mounted display configured to provide emergency response guidance for a first responder at an accident site. The locations of the one or more high-risk level components inside a vehicle can be identified and displayed as if the physical vehicle become transparent and hidden components are revealed. This will reduce the possibility of personal injuries, reduce response time and increase rescuing efficiency.

The embodiments herein can be applied in any type of vehicles such as wagons, motor vehicles e.g. motorcycles, cars, trucks, buses, railed vehicles e.g. trains, trams, watercraft e.g. ships, boats, amphibious vehicles e.g. screw-propelled vehicle, hovercraft, aircraft e.g. airplanes, helicopters, aerostat and spacecraft etc.

The method described above for displaying and identifying one or more high-risk level components inside a vehicle may be implemented in a computer system.

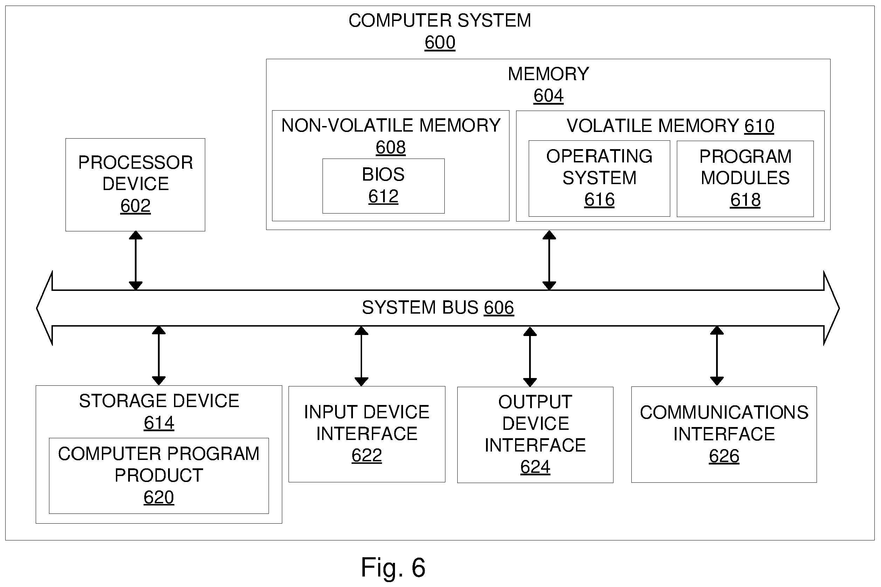

**Fig. 6** is a schematic diagram of a computer system **600** for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise a computing device or electronic device capable of including firmware, hardware, and/or executing software instructions to implement the functionality described herein. The computer system 600 includes a processor device **602** (may also be referred to as a control unit), a memory **604,** and a system bus **606.** The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with a processor device 602. A basic input/output system (BIOS) **612** may be stored in the non-volatile memory 608 and can include the basic routines that help to transfer information between elements within the computing device 600.

The computing device 600 may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like. A number of modules can be implemented as software and/or hard-coded in circuitry to implement the functionality described herein in whole or in part. The modules may be stored in the storage device 614 and/or in the volatile memory 610, which may include an operating system **616** and/or one or more program modules **618.** All or a portion of the examples disclosed herein may be implemented as a computer program product **620** stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller, or control system, for the computing device 600 that is to implement the functionality described herein.

The computer system 600 also may include an input device interface **622** (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computing device 600 may also include a communications interface **626** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method for displaying and identifying one or more high-risk level components (160) inside a vehicle (150), the method comprising:
obtaining (210), by an Augmented Reality, AR, device (110), a digital representation (152) of the vehicle (110), digital representations (162) of one or more high-risk level components (160), and locations (164) of one or more high-risk level components (160) relative to the digital representation (152) of the vehicle (150);
corresponding (220), by the AR device (110), the digital representation (152) of the vehicle (150) to the vehicle (150) in a field of view of the AR device (110); and
displaying (230), by the AR device (110), the digital representations (162) of the one or more high-risk level components (160) on a display (114) of the AR device (110), wherein the digital representations (162) of the one or more high-risk level components (160) are aligned with and overlaying on the vehicle (150) in the field of view of the AR device (110) to identify the locations of the one or more high-risk level components (160) inside the vehicle (150).

2. The method according to claim 1, wherein obtaining (210) the digital representation (152) of the vehicle (150), digital representations (162) of the one or more high-risk level components (160), and locations (164) of the one or more high-risk level components (160) relative to the digital representation (152) of the vehicle (150) comprises:
generating the digital representation (152) of the vehicle (150), digital representations (162) of the one or more high-risk level components (160), and locations (164) of the one or more high-risk level components (160) relative to the digital representation (152) of the vehicle (150) based on an emergency response guide of the vehicle.

3. The method according to claim 1, wherein obtaining the digital representation (152) of the vehicle (150), digital representations (162) of the one or more high-risk level components (160), and locations (164) of the one or more high-risk level components (160) relative to the digital representation (152) of the vehicle (150) comprises:
receiving the digital representation (152) of the vehicle (150), digital representations (162) of the one or more high-risk level components (160), and locations (164) of the one or more high-risk level components (160) relative to the digital representation (152) of the vehicle (150) from a server or cloud (130) based on a type of the vehicle (110).

4. The method according to claim 3, wherein the type of the vehicle (110) is obtained by inputting a series number of the vehicle or a Vehicle Identification Number, or by scanning the vehicle (150), a license plate of the vehicle (150), a bar code or Quick Response (QR) code or by taking a photo of the vehicle (150).

5. The method according to any one of claims 1-4, wherein the one or more high-risk level components (160) comprises any one of compressed air system, fuel tanks, airbags, high voltage components, batteries and cables.

6. An Augmented Reality, AR, device (110) for identifying and displaying one or more high-risk level components (160) inside a vehicle (150), the AR device (110) is configured to:
obtain a digital representation (152) of the vehicle (110), digital representations (162) of one or more high-risk level components (160), and locations (164) of one or more high-risk level components (160) relative to the digital representation (152) of the vehicle (150);
correspond the digital representation (152) of the vehicle (150) to the vehicle (150) in a field of view of the AR device (110); and
display the digital representations (162) of the one or more high-risk level components (160) on a display (114) of the AR device (110), wherein the digital representations (162) of the one or more high-risk level components (160) are aligned with and overlaying on the vehicle (150) in the field of view of the AR device (110) to identify the locations of the one or more high-risk level components (160) inside the vehicle (150).

7. The AR device (110) according to claim 6, wherein the AR device (110) is configured to obtain the digital representation (152) of the vehicle (150), digital representations (162) of the one or more high-risk level components (160), and locations (164) of the one or more high-risk level components (160) relative to the digital representation (152) of the vehicle (150) by being configured to:
generate the digital representation (152) of the vehicle (150), digital representations (162) of the one or more high-risk level components (160), and locations (164) of the one or more high-risk level components (160) relative to the digital representation (152) of the vehicle (150) based on an emergency response guide of the vehicle.

8. The AR device (110) according to claim 6, wherein the AR device (110) is configured to obtain the digital representation (152) of the vehicle (150), digital representations (162) of the one or more high-risk level components (160), and locations (164) of the one or more high-risk level components (160) relative to the digital representation (152) of the vehicle (150) by being configured to:
receive the digital representation (152) of the vehicle (150), digital representations (162) of the one or more high-risk level components (160), and locations (164) of the one or more high-risk level components (160) relative to the digital representation (152) of the vehicle (150) from a server or cloud (130) based on a type of the vehicle (110).

9. The AR device (110) according to any one of claims 6-8, wherein the AR device is any one of a handheld wireless device, smart glasses, a head-up display or a head-mounted display configured to provide emergency response guidance for a first responder at an accident site.

10. A computer program product (580) comprising program code (582) for performing, when executed by the AR device (110), the method of any of claims 1-5.

11. A non-transitory computer-readable storage medium (614) comprising instructions, which when executed by a processor device (602), cause the processor device (602) to perform the method of any of claims 1-5.
